# EUROPÄISCHE PATENTSCHRIFT

(11) **EP 4 259 955 B1**
(45) Veröffentlichungstag und Bekanntmachung des Hinweises auf die Patenterteilung: **03.06.2026**
(21) Anmeldenummer: 22703364.4
(22) Anmeldetag: 02.02.2022
(51) Int. Cl.: F16H 57/08, F01D 25/28, F02C 7/36, F16H 57/00

(54) **VERFAHREN ZUM MONITEREN EINER ROTATORISCH BETREIBBAREN VORRICHTUNG MIT MEHREREN BAUTEILEN**
METHOD FOR FITTING A ROTATIONALLY OPERABLE DEVICE WITH A PLURALITY OF COMPONENTS
PROCÉDÉ DE COMMANDE POUR ÉQUIPER UN DISPOSITIF EXPLOITABLE EN ROTATION D'UNE PLURALITÉ DE COMPOSANTS

(30) Priorität: 16.02.2021 DE 102021103632
(43) Veröffentlichungstag der Anmeldung: 18.10.2023
(73) Patentinhaber: Aerospace Transmission Technologies GmbH, 88255 Friedrichshafen (DE)
(72) Erfinder: ACCIALINI, Nicola, 18100 Armilla (ES); MEISSNER, Matti, 10247 Berlin (DE); KALLIANTERIS, Christos, 12051 Berlin (DE)
(74) Vertreter: Zöschinger, Christian
(86) Internationale Anmeldenummer: PCT/EP2022/052461
(87) Internationale Veröffentlichungsnummer: WO 2022/175088

(56) Entgegenhaltungen:
- WO-A1-2020/202363
- US-A1- 2009 234 481
- US-A1- 2011 296 686

## Beschreibung

Die vorliegende Offenbarung betrifft ein Verfahren zum Montieren einer rotatorisch betreibbaren Vorrichtung mit mehreren Bauteilen.

In der Praxis werden Bauteile während der Montage von rotatorisch betreibbaren Vorrichtungen, wie Turbinen, Kompressoren, Bläsern und auch Planetengetrieben, insbesondere von Gasturbinentriebwerken von Luftfahrzeugen, in Abhängigkeit ihres Bauteilgewichtes derart zueinander positioniert, dass eine Gesamtunwucht solcher Vorrichtungen jeweils möglichst gering ist. Hierfür werden die rotierenden Komponenten bzw. Bauteile selektiv an bestimmten Positionen und nach festgelegten Kriterien montiert.

Bekannte Montageverfahren weisen jedoch Einschränkungen in Bezug auf eine Robustheit des Montageprozesses auf und sind zudem zeitaufwendig.

Aus der US 2009/234481 A1 ist ein Verfahren zur Montage von Rotorblättern bekannt, wobei die Rotorblätter vor der Montage mit einem maschinenlesbaren Datensatz gekennzeichnet werden. Aus der WO 2020/202363 A1 ist ein System zur Herstellung einer rotierenden Baugruppe bekannt, bei dem eine Vielzahl von angebrachten Zielelementen in einer Umfangsrichtung eines rotierenden Hauptkörperteils angebracht werden.

Ausgehend von dem vorstehend beschriebenen Stand der Technik liegt der vorliegenden Offenbarung die Aufgabe zugrunde, ein Verfahren zum Montieren einer rotatorisch betreibbaren Vorrichtung mit mehreren Bauteilen zur Verfügung zu stellen, mittels dem die vorstehend näher beschriebenen Nachteile vermieden werden. Zusätzlich sollen ein Steuergerät, welches zur Durchführung des Verfahrens ausgebildet ist, und ein Computerprogrammprodukt zur Durchführung des Verfahrens angegeben werden.

Diese Aufgabe wird mit einem Verfahren mit den Merkmalen des Patentanspruches 1 gelöst. Vorteilhafte Weiterbildungen sind Gegenstand der Unteransprüche sowie der nachfolgenden Beschreibung.

Es wird ein Verfahren zum Montieren einer rotatorisch betreibbaren Vorrichtung mit mehreren Bauteilen angegeben. Die einzelnen Bauteile werden vor der Montage mit einem maschinenlesbaren Datensatz gekennzeichnet, der als Informationen mindestens eine Teilenummer und das Bauteilgewicht umfasst. Die Bauteile werden in Abhängigkeit der Informationen der maschinenlesbaren Datensätze jeweils an einer definierten Position auf einer Ablageeinrichtung abgelegt. Die Positionen der Bauteile auf der Ablageeinrichtung werden oder sind jeweils mit einer Kennung versehen. Jede Kennung der Position eines Bauteiles auf der Ablageeinrichtung korrespondiert jeweils mit einer Kennung einer Montageposition des Bauteiles. Die Bauteile werden in Abhängigkeit der miteinander korrespondierenden Kennungen montiert.

Mit der Vorgehensweise gemäß der vorliegenden Erfindung wird auf einfache Art und Weise eine hohe Prozessrobustheit erreicht. Des Weiteren ist eine Montage einer rotatorisch betreibbaren Vorrichtung innerhalb kurzer Montagezeiten realisierbar. Diese Vorteile ergeben sich daraus, dass im Gegensatz zu einer manuellen Erfassung der Bauteilinformationen bei der vorgeschlagenen Vorgehensweise fehlerhafte Erfassungen der Bauteilinformationen durch eine Bedienperson sicher vermieden, da die Bauteilinformationen während des Verfahrens gemäß der vorliegenden Erfindung maschinell erfassbar sind. Dadurch werden eine Fehlpositionierung und damit auch eine fehlerhafte Montage auf einfache Art und Weise vermieden.

Jede Position der Bauteile auf der Ablageeinrichtung kann zusätzlich mit einer maschinenlesbaren Kennung versehen werden oder sein. Die maschinenlesbare Kennung kann vor der Montage der Bauteile den Kennungen der Positionen der Bauteile gegenübergestellt werden. Bei Ermittlung von Übereinstimmungen zwischen den Kennungen der Positionen der Bauteile und den maschinenlesbaren Kennungen der Positionen der Bauteile können die Bauteile montiert werden. Aufgrund der dadurch gegebenen doppelten Kontrolle vor der endgültigen Montage der Vorrichtung wird wiederum eine fehlerhafte Montage der Bauteile mit geringem Aufwand vermieden.

Umfassen die maschinenlesbaren Datensätze der Bauteile jeweils als Information eine Seriennummer sind die Bauteile mit geringem Aufwand einer Fertigungsserie zuordenbar.

Bei einer einfach durchführbaren Variante des Verfahrens gemäß der vorliegenden Offenbarung sind die maschinenlesbaren Datensätze jeweils als eine zweidimensionale Datenmatrix oder als ein QR-Code ausgeführt.

Des Weiteren besteht auch die Möglichkeit, dass die maschinenlesbaren Kennungen jeweils als eine zweidimensionale Datenmatrix oder als ein QR-Code ausgeführt sind.

Es kann in einer nicht unter den Schutzbereich fallenden Ausführungsform ein Algorithmus vorgesehen sein, mittels dem in Abhängigkeit der Informationen der maschinenlesbaren Datensätze der Bauteile die Positionen der Bauteile auf der Ablageeinrichtung und die Montagepositionen bestimmt werden. Dadurch wird wiederum auf einfache Art und Weise gewährleistet, dass die einzelnen Bauteile einer rotatorisch betreibbaren Vorrichtung jeweils in gewünschtem Umfang montiert werden und die Vorrichtung durch eine möglichst geringe Gesamtunwucht gekennzeichnet ist.

Werden die Bauteile mittels eines Bestückungsautomaten auf der Ablageeinrichtung abgelegt, ist das Verfahren gemäß der vorliegenden Offenbarung voll automatisiert durchführbar. Des Weiteren besteht dann die Möglichkeit, das Verfahren auch ohne die Kennzeichnung der Positionen der Bauteile auf der Ablageeinrichtung durch die maschinenlesbaren Kennungen mit einer gewünscht hohen Prozessrobustheit durchzuführen.

Gemäß einem weiteren, nicht unter den Schutzbereich fallenden Aspekt der vorliegenden Offenbarung wird ein Steuergerät vorgeschlagen, welches zur Durchführung des Verfahrens gemäß der vorliegenden Offenbarung ausgebildet ist. Das Steuergerät umfasst beispielsweise Mittel, die der Durchführung des Verfahrens dienen. Bei diesen Mitteln kann es sich um hardwareseitige Mittel und um softwareseitige Mittel handeln. Die hardwareseitigen Mittel des Steuergeräts sind beispielsweise Datenschnittstellen, um mit den an der Durchführung des Verfahrens beteiligten Baugruppen Daten auszutauschen. Weitere hardwareseitige Mittel sind beispielsweise ein Speicher zur Datenspeicherung und ein Prozessor zur Datenverarbeitung. Softwareseitige Mittel können unter anderem Programmbausteine zur Durchführung des Verfahrens sein.

Das Steuergerät ist zur Durchführung des Verfahrens mit zumindest einer Empfangsschnittstelle ausführbar, die ausgebildet ist, Signale von Signalgebern zu empfangen. Die Signalgeber können beispielsweise als Sensoren ausgebildet sein, die Messgrößen erfassen und an das Steuergerät übermitteln. Ein Signalgeber kann auch als Signalfühler bezeichnet werden. So kann die Empfangsschnittstelle von einem Signalgeber ein Signal empfangen, über welches signalisiert wird, dass eine rotatorisch betreibbare Vorrichtung montiert werden soll. Das Signal kann beispielsweise durch eine Bedienperson erzeugt werden, indem diese ein Bedienelement betätigt, über welches eine solche Ermittlung angefordert werden kann. Des Weiteren kann das Signal auch von einer Fertigungsstrategie erzeugt werden, die im Bereich des Steuergerätes oder im Bereich eines weiteren Steuergerätes einer Werkzeugmaschine oder dergleichen aktiviert ist und durchgeführt wird.

Das Steuergerät kann zudem eine Datenverarbeitungseinheit aufweisen, um die empfangenen Eingangssignale bzw. die Informationen der empfangenen Eingangssignale auszuwerten und/oder zu verarbeiten.

Auch kann das Steuergerät mit einer Sendeschnittstelle ausgeführt sein, die ausgebildet ist, Steuersignale an Stellglieder auszugeben. Unter einem Stellglied sind Aktoren zu verstehen, die die Befehle des Steuergerätes umsetzen. Die Aktoren können beispielsweise als hydraulische, elektrische oder mechanische Aktoren ausgebildet sein, die die jeweils zum Herstellen oder Lösen der Presspassung erforderliche axiale Stellkraft sowie den Druck des Hydraulikfluids erzeugen bzw. zur Verfügung stellen
Wird durch das Steuergerät erkannt, dass eine rotatorisch betreibbare Vorrichtung mit mehreren Bauteilen montiert werden soll, werden die einzelnen Bauteile vor der Montage durch das Steuergerät mit einem maschinenlesbaren Datensatz gekennzeichnet, der mindestens eine Teilenummer und das Bauteilgewicht als Informationen umfasst. Des Weiteren werden die Bauteile mittels des Steuergerätes in Abhängigkeit der Informationen der maschinenlesbaren Datensätze jeweils an einer definierten Position auf einer Ablageeinrichtung abgelegt. Zusätzlich werden oder sind die Positionen der Bauteile auf der Ablageeinrichtung jeweils mittels des Steuergerätes mit einer Kennung versehen. Dabei korrespondiert jede Kennung der Position eines Bauteiles auf der Ablageeinrichtung jeweils mit einer Kennung einer Montageposition des Bauteiles. Zusätzlich werden die Bauteile mittels des Steuergerätes in Abhängigkeit der miteinander korrespondierenden Kennungen montiert.

Dadurch wird wiederum gewährleistet, dass der Montageprozess mit hoher Robustheit innerhalb kurzer Montagezeiten durchführbar ist.

Die zuvor genannten Signale sind nur als beispielhaft anzusehen und sollen die vorliegende Offenbarung nicht beschränken. Die erfassten Eingangssignale und die ausgegebenen Steuersignale können über einen Datenbus übertragen werden. Die Steuerungseinrichtung bzw. das Steuergerät kann beispielsweise als zentrales elektronisches Steuergerät einer Werkzeugmaschine ausgebildet sein.

Die vorliegend vorgeschlagene Lösung lässt sich auch als nicht unter den Schutzbereich fallendes Computerprogrammprodukt verkörpern, welches, wenn es auf einem Prozessor einer Steuerungseinrichtung läuft, den Prozessor softwaremäßig anleitet, die zugeordneten Verfahrensschritte gemäß der vorliegenden Offenbarung durchzuführen. **In** diesem Zusammenhang gehört auch ein nicht unter den Schutzbereich fallendes computerlesbares Medium zum Gegenstand der vorliegenden Offenbarung, auf dem ein vorstehend beschriebenes Computerprogrammprodukt abrufbar gespeichert ist.

Es werden nun beispielhaft Ausführungsformen mit Bezug auf die Figuren beschrieben.

Es zeigt:
Fig. 1 eine Längsschnittansicht eines Gasturbinentriebwerks;
Fig. 2 eine vergrößerte Teillängsschnittansicht eines stromaufwärtigen Abschnitts eines Gasturbinentriebwerks;
Fig. 3 eine Alleindarstellung eines Getriebes für ein Gasturbinentriebwerk;
Fig. 4 eine Ablageeinrichtung sowie auf der Ablageeinrichtung positionierte Planetenräder des Getriebes gemäß Fig. 3; und
Fig. 5 ein stark vereinfachtes Ablaufschema einer Variante des Verfahrens zum Montieren des Getriebes gemäß Fig. 3.

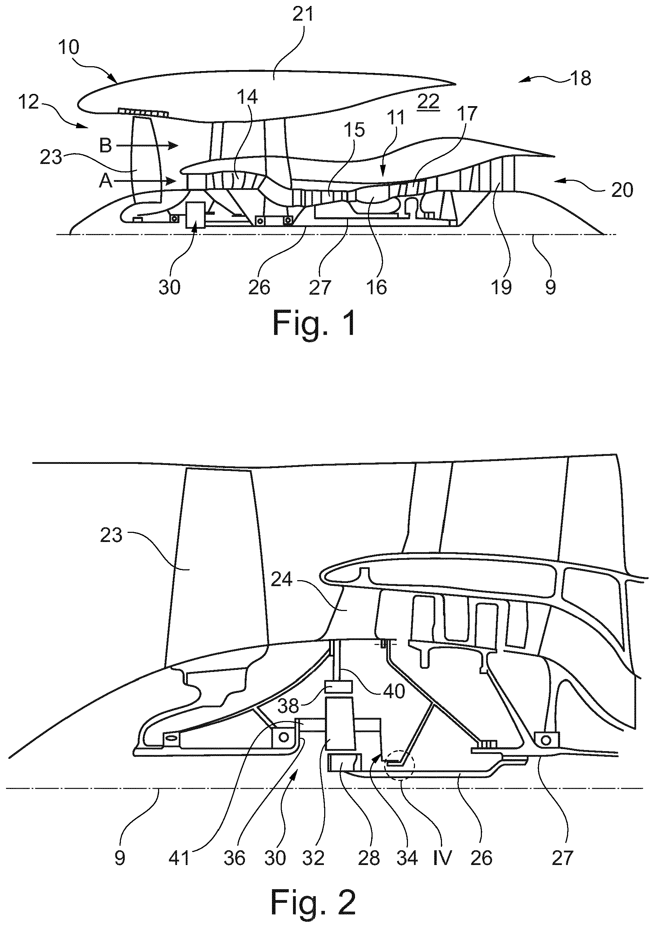

Fig. 1 stellt ein Gasturbinentriebwerk 10 mit einer Hauptdrehachse 9 dar. Das Triebwerk 10 umfasst einen Lufteinlass 12 und ein Schubgebläse 23, das zwei Luftströme erzeugt: einen Kernluftstrom A und einen Bypassluftstrom B. Das Gasturbinentriebwerk 10 umfasst einen Kern 11, der den Kernluftstrom A aufnimmt. Der Triebwerkskern 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Das Gebläse 23 ist über eine Welle 26 und ein Epizykloidengetriebe 30 an der Niederdruckturbine 19 angebracht und wird durch diese angetrieben. Dabei wird die Welle 26 auch als Kernwelle bezeichnet.

Im Gebrauch wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an, die auch als Kernwelle bezeichnet wird. Das Gebläse 23 stellt allgemein den Hauptteil der Schubkraft bereit. Das Epizykloidengetriebe 30 ist ein Untersetzungsgetriebe.

Eine beispielhafte Anordnung für ein Getriebegebläse-Gasturbinentriebwerk 10 wird in Fig. 2 gezeigt. Die Niederdruckturbine 19 (siehe Fig. 1) treibt die Welle 26 an, die mit einem Sonnenrad 28 der Epizykloidengetriebeanordnung 30 gekoppelt ist. Mehrere Planetenräder 32, die durch einen Planetenträger 34 miteinander gekoppelt sind, befinden sich von dem Sonnenrad 28 radial außen und kämmen damit und sind jeweils drehbar auf drehfest mit dem Planetenträger 34 verbundenen Trägerelementen 41 bzw. Planetenbolzen angeordnet. Der Planetenträger 34 beschränkt die Planetenräder 32 darauf, synchron um das Sonnenrad 28 zu kreisen, während er ermöglicht, dass sich jedes Planetenrad 32 auf den Trägerelementen 41 um seine eigene Achse drehen kann. Der Planetenträger 34 ist über Gestänge 36 mit dem Gebläse 23 dahingehend gekoppelt, seine Drehung um die Triebwerksachse 9 anzutreiben. Ein Außenrad oder Hohlrad 38, das über Gestänge 40 mit einer stationären Stützstruktur 24 gekoppelt ist, befindet sich von den Planetenrädern 32 radial außen und kämmt damit.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht das Gebläse 23 umfassen) und/oder die Turbinen- und Verdichterstufe, die durch die Verbindungswelle 26 mit der niedrigsten Drehzahl in dem Triebwerk (d. h. dass sie nicht die Getriebeausgangswelle, die das Gebläse 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann das Gebläse 23 als eine erste Verdichtungsstufe oder Verdichtungsstufe mit dem niedrigsten Druck bezeichnet werden.

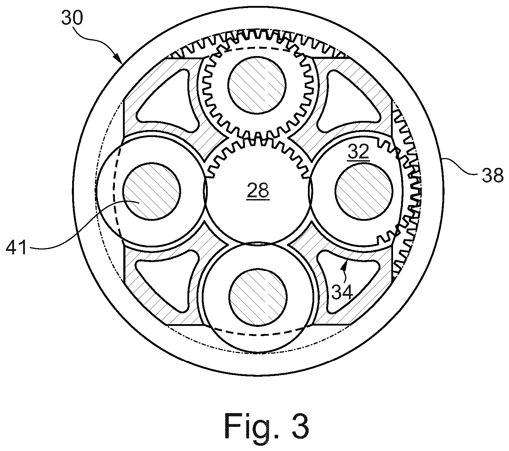

Das Epizykloidengetriebe 30 wird in Fig. 3 beispielhaft genauer gezeigt. Das Sonnenrad 28, die Planetenräder 32 und das Hohlrad 38 umfassen jeweils Zähne um ihre Peripherie zum Kämmen mit den anderen Zahnrädern. Jedoch werden der Übersichtlichkeit halber lediglich beispielhafte Abschnitte der Zähne in Fig. 3 dargestellt. Obgleich vier Planetenräder 32 dargestellt werden, liegt für den Fachmann auf der Hand, dass innerhalb des Schutzumfangs der beanspruchten Erfindung mehr oder weniger Planetenräder 32 vorgesehen sein können. Praktische Anwendungen eines Epizykloidengetriebes 30 umfassen allgemein mindestens drei Planetenräder 32.

Das in Fig. 2 und 3 beispielhaft dargestellte Epizykloidengetriebe 30 ist ein Planetengetriebe, bei dem der Planetenträger 34 über Gestänge 36 mit einer Ausgangswelle gekoppelt ist, wobei das Hohlrad 38 festgelegt ist. Jedoch kann eine beliebige andere geeignete Art von Epizykloidengetriebe 30 verwendet werden. Als ein weiteres Beispiel kann das Epizykloidengetriebe 30 eine Sternanordnung sein, bei der der Planetenträger 34 festgelegt gehalten wird, wobei gestattet wird, dass sich das Hohlrad (oder Außenrad) 38 dreht. Bei solch einer Anordnung wird das Gebläse 23 von dem Hohlrad 38 angetrieben. Als ein weiteres alternatives Beispiel kann das Getriebe 30 ein Differenzialgetriebe sein, bei dem gestattet wird, dass sich sowohl das Hohlrad 38 als auch der Planetenträger 34 drehen.

Es versteht sich, dass die in Fig. 2 und 3 gezeigte Anordnung lediglich beispielhaft ist und verschiedene Alternativen in dem Schutzumfang der vorliegenden Offenbarung liegen. Lediglich beispielhaft kann eine beliebige geeignete Anordnung zur Positionierung des Getriebes 30 in dem Triebwerk 10 und/oder zur Verbindung des Getriebes 30 mit dem Triebwerk 10 verwendet werden. Als ein weiteres Beispiel können die Verbindungen (z. B. die Gestänge 36, 40 in dem Beispiel von Fig. 2) zwischen dem Getriebe 30 und anderen Teilen des Triebwerks 10 (wie z. B. der Eingangswelle 26, der Ausgangswelle und der festgelegten Struktur 24) einen gewissen Grad an Steifigkeit oder Flexibilität aufweisen. Als ein weiteres Beispiel kann eine beliebige geeignete Anordnung der Lager zwischen rotierenden und stationären Teilen des Triebwerks (beispielsweise zwischen der Eingangs- und der Ausgangswelle des Getriebes und den festgelegten Strukturen, wie z. B. dem Getriebegehäuse) verwendet werden, und die Offenbarung ist nicht auf die beispielhafte Anordnung von Fig. 2 beschränkt. Beispielsweise ist für den Fachmann ohne weiteres erkenntlich, dass sich die Anordnung von Ausgang und Stützgestängen und Lagerpositionierungen bei einer Sternanordnung (oben beschrieben) des Getriebes 30 in der Regel von jenen, die beispielhaft in Fig. 2 gezeigt werden, unterscheiden würden.

Entsprechend dehnt sich die vorliegende Offenbarung auf ein Gasturbinentriebwerk mit einer beliebigen Anordnung der Getriebearten (beispielsweise sternförmig oder planetenartig), Stützstrukturen, Eingangs- und Ausgangswellenanordnung und Lagerpositionierungen aus.

Optional kann das Getriebe Neben- und/oder alternative Komponenten (z. B. den Mitteldruckverdichter und/oder einen Nachverdichter) antreiben.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und/oder Turbinen und/oder eine alternative Anzahl an Verbindungswellen aufweisen. Als ein weiteres Beispiel weist das in Fig. 1 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch- oder Teilungsstrom) kann oder können einen festgelegten oder variablen Bereich aufweisen. Obgleich sich das beschriebene Beispiel auf ein Turbogebläsetriebwerk bezieht, kann die Offenbarung beispielsweise bei einer beliebigen Art von Gasturbinentriebwerk, wie z. B. bei einem Open-Rotor- (bei dem die Gebläsestufe nicht von einer Triebwerksgondel umgeben wird) oder einem Turboprop-Triebwerk, angewendet werden.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Fig. 1) und eine Umfangsrichtung (senkrecht zu der Ansicht in Fig. 1) umfasst. Die axiale, die radiale und die Umfangsrichtung verlaufen senkrecht zueinander.

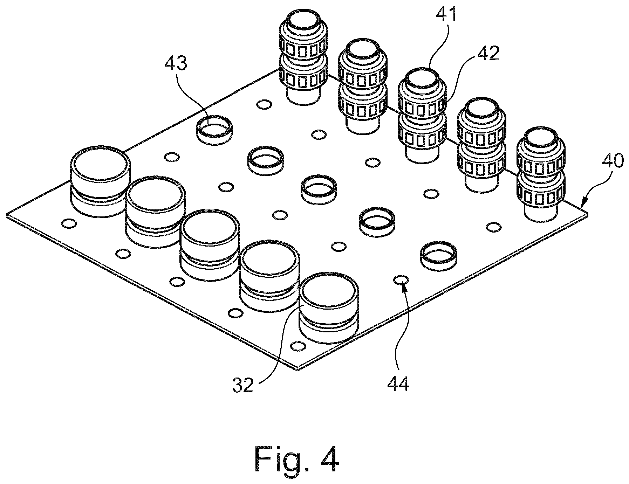

Fig. 4 zeigt eine Ablageeinrichtung 40, auf der mehrere Planetenräder 32 des Getriebes 30 gemäß Fig. 3 abgelegt sind. Neben den Planetenrädern 32 sind auf der Ablageeinrichtung 40 auch mehrere Planetenbolzen 41 positioniert, auf welchen jeweils als Wälzlager ausgeführte Lager 42 vormontiert sind. Über die Lager 42 sind die Planetenräder 32 in montiertem Zustand des Getriebes 30 drehbar auf dem Planetenbolzen 41 drehbar gelagert. Zusätzlich sind auf der Ablageeinrichtung 40 auch Keilhülsen 43 abgelegt, mittels welchen die Planetenbolzen 41 in an sich bekannter Art und Weise drehfest mit dem Planetenträger 34 verbindbar sind.

Die Planetenbolzen 41, die Lager 42, die Keilhülsen 43 und die Planetenräder 32 werden vor der Montage des Getriebes 30 und vor der Ablage auf der Ablageeinrichtung 40 mit einem maschinenlesbaren Datensatz gekennzeichnet. Die maschinenlesbaren Datensätze umfassen als Informationen mindestens jeweils eine Teilenummer, ein Bauteilgewicht sowie eine Seriennummer der Bauteile 32 bis 43.

Im Anschluss daran werden die Bauteile 32 bis 43 in Abhängigkeit der Informationen der maschinenlesbaren Datensätze mithilfe eines Algorithmus jeweils an einer definierten Position in der in Fig. 4 dargestellten Art und Weise auf der Ablageeinrichtung 40 abgelegt. Zusätzlich werden über den Algorithmus auch Montagepositionen der Bauteile 32 bis 43 am Planetenträger 34 festgelegt.

Des Weiteren werden die Positionen der Bauteile 32 bis 43 auf der Ablageeinrichtung 40 jeweils mit einer Kennung 44 versehen, die vorliegend als LED-Lampen ausgeführt sind und die verschiedenfarbig ansteuerbar sind. Dabei hängt die Anzahl der verschiedenen Farben der LED-Lampen 44 von der Anzahl der verschiedenen Positionen der Bauteile 32 bis 43 im Planetenträger 34 ab. Die Anzahl der verschiedenen Positionen variiert üblicherweise zwischen drei und fünf. Ist eine höhere Anzahl von Montagepositionen zu berücksichtigen, dann besteht auch die Möglichkeit, beispielsweise kleine Bildschirme oder dergleichen zur Kennung der Positionen der Bauteile auf der Ablageeinrichtung 40 sowie der damit korrespondierenden Montagepositionen, beispielsweise durch Anzeige von Zahlen oder dergleichen, vorzusehen.

Sobald die Positionierung der Bauteile 32 bis 43 auf der Ablageeinrichtung 40 beendet ist, werden die Bauteile 32 bis 43 am Planetenträger 34 montiert. Dabei ist jeder Montageposition eine Kennung zugeordnet, die mit einer Kennung der Position des zu montierenden Bauteiles auf der Ablageeinrichtung 40 korrespondiert. Vorzugsweise weisen jeweils die Kennungen der Bauteile auf der Ablageeinrichtung 40 und die Kennungen der Montagepositionen der Bauteile 32 bis 43 jeweils die gleiche Färbung oder die gleiche Nummerierung auf, womit eine visuelle Unterstützung zur Verfügung steht, um die richtige Montageposition der Bauteile 32 bis 43 zu ermitteln.

Zusätzlich besteht die Möglichkeit, dass jede Ablageposition der Bauteile 32 bis 43 zusätzlich mit einer maschinenlesbaren Kennung versehen ist oder wird, um eine doppelte Kontrolle durchführen und eine fehlerhafte Montage vermeiden zu können.

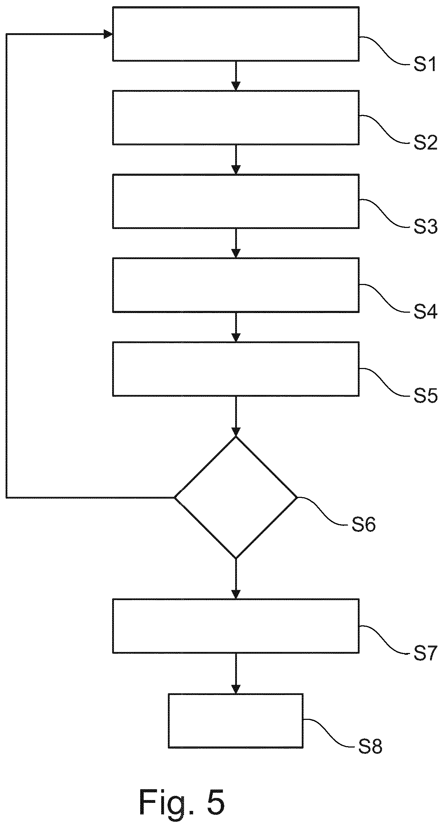

Fig. 5 zeigt ein stark vereinfachtes Ablaufdiagramm des vorstehend näher beschriebenen Verfahrens. Dabei werden während eines ersten Schrittes S1 die Bauteile 32 bis 43 im angegebenen Umfang auf der Ablageeinrichtung 40 positioniert. Während eines sich daran anschließenden zweiten Schrittes 2 werden die Bauteile 32 bis 43 gescannt bzw. deren maschinenlesbare Datensätze ausgelesen.

Die Informationen der ausgelesenen Datensätze der Bauteile 32 bis 43 werden mithilfe des Algorithmus zur Bestimmung der Positionen der Bauteile 32 bis 43 auf der Ablageeinrichtung 40 während eines Schrittes S3 verwendet. Anschließend daran werden die Bauteile 32 bis 43 während eines Schrittes S4 auf Transportwagen abgelegt.

Zusätzlich werden die maschinenlesbaren Kennungen der Positionen der Bauteile 32 bis 43 ausgelesen und den Kennungen der Positionen der Bauteile 32 bis 43 gegenübergestellt. Wird während der Gegenüberstellung der Kennungen und der maschinenlesbaren Kennungen der Positionen der Bauteile während eines Abfrageschrittes S6 ermittelt, dass die Bauteile 32 bis 43 sich jeweils auf der Ablageeinrichtung 40 an den vorgesehen Positionen befinden, werden die Bauteile 32 bis 43 während eines Schrittes S7 am Planetenträger 34 montiert und im Anschluss daran während eines weiteren Schrittes S8 das Verfahren beendet.

Bei negativem Abfrageergebnis des Abfrageschrittes S6 wird zum Schritt S1 zurückverzweigt und das Verfahren erneut durchgeführt.

Die Ablageeinrichtung kann ein Tisch, ein Regal, eine Platte oder dergleichen sein.

Das vorbeschriebene Verfahren ist nicht nur für die Montage eines Planetengetriebes geeignet. Es besteht auch die Möglichkeit, Kompressoren, Turbinen und Bläser in der vorbeschriebenen Art und Weise zu montieren und mit einer möglichst geringen Gesamtunwucht auszuführen.

Zusätzlich besteht auch die Möglichkeit, dass das Planetengetriebe 30 neben den Planetenrädern 32, den Lagern 42, den Planetenbolzen 41, den Keilhülsen 43 auch Unterlegscheiben, Ölleitbleche, Ölzuführeinrichtungen, wie Ölbrausen, oder Ölleitungen umfasst.

### Bezugszeichenliste

- 9: Hauptdrehachse
- 10: Gasturbinentriebwerk
- 11: Kern
- 12: Lufteinlass
- 14: Niederdruckverdichter
- 15: Hochdruckverdichter
- 16: Verbrennungseinrichtung
- 17: Hochdruckturbine
- 18: Bypassschubdüse
- 19: Niederdruckturbine
- 20: Kernschubdüse
- 21: Triebwerksgondel
- 22: Bypasskanal
- 23: Schubgebläse
- 24: Stützstruktur
- 26: Welle, Verbindungswelle
- 27: Verbindungswelle
- 28: Sonnenrad
- 28A: Zahnprofil des Sonnenrades
- 30: Getriebe, Planetengetriebe
- 32: Planetenrad
- 34: Planetenträger
- 36: Gestänge
- 38: Hohlrad
- 40: Ablageeinrichtung
- 41: Planetenbolzen
- 42: Lager
- 43: Keilhülse
- 44: Kennung
- A: Kernstrom
- B: Bypassstrom
- S1 bis S8: Schritt

## Patentansprüche

1. Verfahren zum Montieren einer rotatorisch betreibbaren Vorrichtung (30) mit mehreren Bauteilen (28, 32, 34, 38, 41, 42, 43),
wobei die einzelnen Bauteile (32, 41, 42, 43) vor der Montage mit einem maschinenlesbaren Datensatz gekennzeichnet werden, der mindestens eine Teilenummer und das Bauteilgewicht als Informationen umfasst;
**dadurch gekennzeichnet, dass** die Bauteile (32, 41, 42, 43) in Abhängigkeit der Informationen der maschinenlesbaren Datensätze jeweils an einer definierten Position auf einer Ablageeinrichtung (40) abgelegt werden;
wobei die Positionen der Bauteile (32, 41, 42, 43) auf der Ablageeinrichtung (40) jeweils mit einer Kennung versehen werden oder sind;
wobei jede Kennung der Position eines Bauteiles (32, 41, 42, 43) auf der Ablageeinrichtung (40) jeweils mit einer Kennung einer Montageposition des Bauteiles (32, 41, 42, 43) korrespondiert;
und wobei die Bauteile (32, 41, 42, 43) in Abhängigkeit der miteinander korrespondierenden Kennungen montiert werden.

2. Verfahren nach Anspruch 1, **dadurch gekennzeichnet, dass** jede Position der Bauteile (32, 41, 42, 43) auf der Ablageeinrichtung (40) zusätzlich mit einer maschinenlesbaren Kennung versehen wird oder ist, die vor der Montage der Bauteile (32, 41, 42, 43) den Kennungen der Positionen der Bauteile (32, 41, 42, 43) gegenübergestellt werden, wobei die Bauteile (32, 41, 42, 43) bei Ermittlung von Übereinstimmungen zwischen den Kennungen der Positionen der Bauteile (32, 41, 42, 43) und den maschinenlesbaren Kennungen der Positionen der Bauteile (32, 41, 42, 43) montiert werden.

3. Verfahren nach Anspruch 1 oder 2, **dadurch gekennzeichnet, dass** die maschinenlesbaren Datensätze der Bauteile (32, 41, 42, 43) jeweils als Information eine Seriennummer umfassen.

4. Verfahren nach einem der Ansprüche 1 bis 3, **dadurch gekennzeichnet, dass** die maschinenlesbaren Datensätze der Bauteile (32, 41, 42, 43) jeweils als eine zweidimensionale Datenmatrix oder als ein QR-Code ausgeführt sind.

5. Verfahren nach Anspruch 2, **dadurch gekennzeichnet, dass** die maschinenlesbaren Kennungen der Positionen der Bauteile (32, 41, 42, 43) jeweils als eine zweidimensionale Datenmatrix oder als ein QR-Code ausgeführt sind.

6. Verfahren nach einem der Ansprüche 1 bis 5, **dadurch gekennzeichnet, dass** die Bauteile (32, 41, 42, 43) mittels eines Bestückungsautomaten auf der Ablageeinrichtung (40) abgelegt werden.

## Claims

1. Method for assembling a rotatably operable device (30) comprising multiple components (28, 32, 34, 38, 41, 42, 43),
wherein the individual components (32, 41, 42, 43) are marked prior to assembly with a machine-readable data record comprising at least a part number and the component weight as information;
**characterized in that**, the components (32, 41, 42, 43) are placed at a defined position on a storage device (40) based on the information in the machine-readable data records;
wherein the positions of the components (32, 41, 42, 43) on the storage device (40) are each provided with an identifier;
wherein each identifier of the position of a component (32, 41, 42, 43) on the storage device (40) corresponds to an identifier of an assembly position of the component (32, 41, 42, 43);
and wherein the components (32, 41, 42, 43) are assembled based on the corresponding identifiers.

2. Method according to claim 1, **characterized in that** each position of the components (32, 41, 42, 43) on the storage device (40) is additionally provided with a machine-readable identifier which is compared with the identifiers of the positions of the components (32, 41, 42, 43) prior to the assembly of the components (32, 41, 42, 43), wherein the components (32, 41, 42, 43) are mounted upon detection of matches between the identifiers of the positions of the components (32, 41, 42, 43) and the machine-readable identifiers of the positions of the components (32, 41, 42, 43).

3. Method according to claim 1 or 2, **characterized in that** the machine-readable data records of the components (32, 41, 42, 43) each include a serial number as part of the information.

4. Method according to any one of claims 1 to 3, **characterized in that** the machine-readable data records of the components (32, 41, 42, 43) each are implemented as a two-dimensional data matrix or as a QR code.

5. Method according to claim 2, **characterized in that** the machine-readable identifiers of the positions of the components (32, 41, 42, 43) each are implemented as a two-dimensional data matrix or as a QR code.

6. Method according to any one of claims 1 to 5, **characterized in that** the components (32, 41, 42, 43) are placed on the storage device (40) by means of an automatic placement machine.

## Revendications

1. Procédé de montage d'un dispositif (30) pouvant être exploité en rotation, comportant plusieurs composants (28, 32, 34, 38, 41, 42, 43),
dans lequel les différents composants (32, 41, 42, 43) sont, avant le montage, marqués par un jeu de données lisible par machine, qui comprend comme informations au moins un numéro de pièce et le poids du composant ;
**caractérisé en ce que** les composants (32, 41, 42, 43) sont déposés respectivement, en fonction des informations des jeux de données lisibles par machine, à une position définie sur un dispositif de support (40) ;
les positions des composants (32, 41, 42, 43) sur le dispositif de support (40) étant chacune pourvues d'un identifiant ou l'étant ;
chaque identifiant de la position d'un composant (32, 41, 42, 43) sur le dispositif de support (40) correspondant respectivement à un identifiant d'une position de montage du composant (32, 41, 42, 43) ;
et les composants (32, 41, 42, 43) étant montés en fonction des identifiants correspondant les uns aux autres.

2. Procédé selon la revendication 1, **caractérisé en ce que** chaque position des composants (32, 41, 42, 43) sur le dispositif de support (40) est en outre pourvue, ou l'est, d'un identifiant lisible par machine, lequel est comparé, avant le montage des composants (32, 41, 42, 43), aux identifiants des positions des composants (32, 41, 42, 43), les composants (32, 41, 42, 43) étant montés lorsqu'une concordance est établie entre les identifiants des positions des composants (32, 41, 42, 43) et les identifiants lisibles par machine des positions des composants (32, 41, 42, 43).

3. Procédé selon la revendication 1 ou 2, **caractérisé en ce que** les jeux de données lisibles par machine des composants (32, 41, 42, 43) comprennent respectivement, comme information, un numéro de série.

4. Procédé selon l'une quelconque des revendications 1 à 3, **caractérisé en ce que** les jeux de données lisibles par machine des composants (32, 41, 42, 43) sont respectivement réalisés sous la forme d'une matrice de données bidimensionnelle ou d'un code QR.

5. Procédé selon la revendication 2, **caractérisé en ce que** les identifiants lisibles par machine des positions des composants (32, 41, 42, 43) sont respectivement réalisés sous la forme d'une matrice de données bidimensionnelle ou d'un code QR.

6. Procédé selon l'une quelconque des revendications 1 à 5, **caractérisé en ce que** les composants (32, 41, 42, 43) sont déposés sur le dispositif de support (40) au moyen d'un automate de placement.
